# EUROPEAN PATENT APPLICATION

(11) **EP 4 421 937 A1**
(43) Date of publication of application: **28.08.2024**
(21) Application number: 23197391.8
(22) Date of filing: 14.09.2023
(51) Int. Cl.: H01M 10/0568, H01M 10/0567, H01M 10/0525, H01M 4/525

(54) **RECHARGEABLE LITHIUM BATTERY**

(30) Priority: 24.02.2023 KR 20230025397
(71) Applicant: Samsung SDI Co., Ltd., Yongin-si, Gyeonggi-do 17084 (KR)
(72) Inventor: KIM, Myunghoon, 17084 Yongin-si (KR); KIM, Yunhee, 17084 Yongin-si (KR); PARK, Injun, 17084 Yongin-si (KR); KIM, Aeran, 17084 Yongin-si (KR); OH, Seungryong, 17084 Yongin-si (KR); SHIN, Jeongmin, 17084 Yongin-si (KR)
(74) Representative: Russell, Tim

(57) **Abstract**

A rechargeable lithium battery according to an embodiment of the present invention comprises a positive electrode comprising a positive electrode active material; a negative electrode comprising a negative electrode active material; and an electrolyte solution comprising a non-aqueous organic solvent, a lithium salt, and an additive. The positive electrode active material comprises a composite oxide having a nickel content of greater than about 8o mol% based on a total amount of metals except lithium. In addition, the lithium salt comprises a compound represented by Chemical Formula 1; the additive comprises a compound represented by Chemical Formula 2, and the compound represented by Chemical Formula 1 is comprised in about to wt% to about 8o wt% based on a total amount of the lithium salt.

Details of Chemical Formulas 1 and 2 are as described in the specification.

## Description

### BACKGROUND OF THE INVENTION

### (a) Field of the Invention

This disclosure relates to a rechargeable lithium battery.

### (b) Description of the Related Art

A rechargeable lithium battery may be recharged and has three or more times higher energy density per unit weight than a conventional lead storage battery, nickelcadmium battery, nickel hydrogen battery, nickel zinc battery and the like, and may be highly charged and thus, is commercially manufactured for a laptop, a cell phone, an electric tool, an electric bike, and the like, and researches on improvement of additional energy density have been actively made.

Such a rechargeable lithium battery is manufactured by injecting an electrolyte solution into a battery cell, which comprises a positive electrode comprising a positive electrode active material capable of intercalating/deintercalating lithium ions and a negative electrode comprising a negative electrode active material capable of intercalating/deintercalating lithium ions.

Recently, development of rechargeable lithium batteries has been progressing in a direction of increasing energy density. However, as the energy density of rechargeable lithium batteries is increased, there are problems of deteriorating cycle-life characteristics at room temperature and storage performance at a high temperature and increasing resistance at both room temperature and/or high temperature.

Accordingly, it is required to combine an electrolyte solution exhibiting improved safety without deteriorating performance at room temperature and/or high temperature with a positive electrode active material increasing the energy density of rechargeable lithium batteries.

### SUMMARY OF THE INVENTION

An embodiment is to increase the energy density of a rechargeable lithium battery while improving safety at room temperature and/or high temperature without deterioration in performance.

An embodiment of the present invention provides a rechargeable lithium battery comprising
a positive electrode comprising a positive electrode active material;
a negative electrode comprising a negative electrode active material; and
an electrolyte solution comprising a non-aqueous organic solvent, a lithium salt, and an additive,
wherein the positive electrode active material comprises a composite oxide having a nickel content of greater than about 80 mol% based on a total amount of metals except lithium,
the lithium salt comprises a compound represented by Chemical Formula 1, and the compound represented by Chemical Formula 1 is comprised in about 10 wt% to about 50 wt% based on a total amount of the lithium salt, and
the additive comprises a compound represented by Chemical Formula 2: 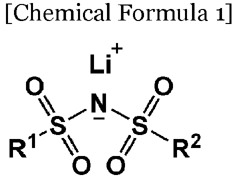 wherein, in Chemical Formula 1,
   R¹ and R² are each independently a fluoro group or a C1 to C4 alkyl group substituted with at least one fluoro group; 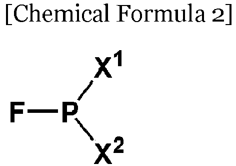 wherein, in Chemical Formula 2,
   X¹ and X² are each a halogen, or -O-L¹-R³, provided that at least one of X¹ and X² is -O-L¹-R³;
   L¹ is a single bond or a substituted or unsubstituted C1 to C10 alkylene group;
   R³ is each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group; and
   when X¹ and X² are simultaneously -O-L¹-R³, R³ is each independently present or two R³s are linked to form a substituted or unsubstituted monocyclic or polycyclic aliphatic heterocycle, or a substituted or unsubstituted monocyclic or forms polycyclic aromatic heterocycle.

In Chemical Formula 1, R¹ and R² may each independently be a fluoro group or a C1 to C4 alkyl group substituted with at least three fluoro groups.

In Chemical Formula 1, R¹ and R² may be the same.

Chemical Formula 1 may be Chemical Formula 1-1 or 1-2:

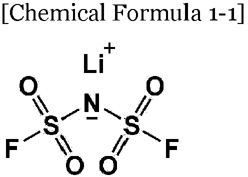

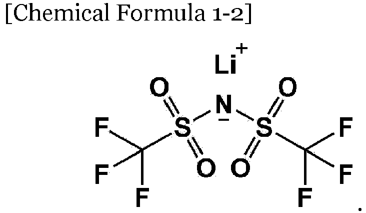

The lithium salt may further comprise one or two or more selected from LiPF₆, LiBF₄, lithium difluoro(oxalate)borate (LiDFOB), LiPO₂F₂, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₚF₂ₚ₊₁SO₂)(C_{q}F_{2q+1}SO₂), wherein, p and q are integers from 1 to 20, LiCl, LiI, and LiB(C₂O₄)₂ (lithium bis(oxalato) borate: LiBOB).

The lithium salt may comprise the compound represented by Chemical Formula 1 and LiPF₆.

Based on a total amount of the lithium salt, the compound represented by Chemical Formula 1 maybe comprised in an amount of about 10 wt% to about 50 wt%, and LiPF₆ may be comprised in a balance amount.

A total amount of the lithium salt may correspond to a molar concentration of about 0.1 M to about 2.0 M in the electrolyte solution.

In Chemical Formula 2,
one of X¹ and X² may be a fluoro group and the other may be -O-L²-R⁴;
L² may be a single bond or a substituted or unsubstituted C1 to C10 alkylene group; and
R4 may be a cyano group (-CN) or a difluorophosphite group (-OPF₂).

In this case, Chemical Formula 2 may be Chemical Formula 2-1: 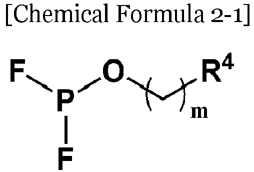 wherein, in Chemical Formula 2-1,
m is an integer from 1 to 5; and
R4 is a cyano group (-CN) or a difluorophosphite group (-OPF₂). Independently of the above, in Chemical Formula 2,
X¹ may be -O-L³-R⁵ and X² may be -O-L⁴-R⁶;
L³ and L⁴ may each independently be a single bond or a substituted or unsubstituted C1 to C10 alkylene group; and
R⁵ and R⁶ may each independently be a substituted or unsubstituted C1 to C10 alkyl group, and R⁵ and R⁶ may be linked to form a substituted or unsubstituted monocyclic or polycyclic aliphatic heterocycle:

Chemical Formula 2 may be Chemical Formula 2-2: 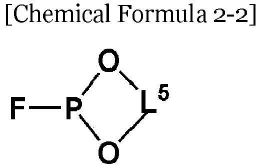 wherein, in Chemical Formula 2-2,
L⁵ is a substituted or unsubstituted C2 to C5 alkylene group.

In this case, Chemical Formula 2-2 may be Chemical Formula 2-2a or 2-2b: 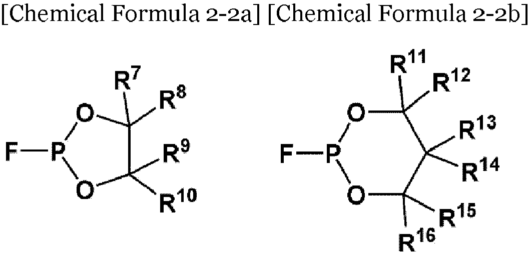 wherein, in Chemical Formulas 2-2a and 2-2b,
R⁷ to R¹⁶ are each independently hydrogen, a halogen, or a substituted or unsubstituted C1 to C5 alkyl group.

For example, the additive may be any one selected from:

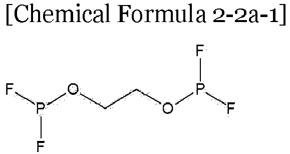

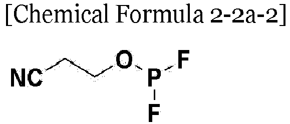

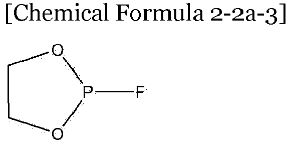

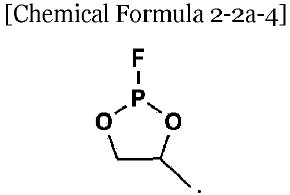

The additive may be comprised in an amount of about 0.05 wt% to about 5.0 wt% based on a total weight of the electrolyte solution.

The positive electrode active material may comprise a composite oxide represented by Chemical Formula 3:

[Chemical Formula 3] LiₐNiₓM¹_{y}M²_{z}O_{2-b}X_{b}

wherein, in Chemical Formula 3,
0.9 ≤ a < 1.2, 0.8 < x ≤ 1, 0 ≤ y ≤ 0.2, 0 < z ≤ 0.2, x + y + z = 1 and 0 ≤ b ≤ 0.1;
M¹ and M² are each independently one or more elements selected from Mn, Al, B, Ba, Ca, Ce, Co, Cr, Cu, Fe, Mg, Mn, Mo, Nb, Si, Sr, Ti, V, W, and Zr; and
X is one or more elements selected from F, P, and S.

The positive electrode active material may comprise a composite oxide represented by Chemical Formula 3-1, a composite oxide represented by Chemical Formula 3-2, or a combination thereof:

[Chemical Formula 3-1] Liₐ₁Niₓ₁Mn_{y1}M²_{z1}O_{2-b1}X_{b1}

[Chemical Formula 3-2] Liₐ₂Niₓ₂Al_{y2}M2_{z2}O_{2-b2}X_{b2}

wherein, in Chemical Formulas 3-1 and 3-2,
0.9 ≤ a1 < 1.2, 0.8 < x1 ≤ 1, 0 ≤ y₁ ≤ 0.2, 0 < z1 ≤ 0.2, x1 + y1 + z1 = 1 and 0 ≤ b1 ≤ 0.1;
0.9 ≤ a2 < 1.2, 0.8 < x2 ≤ 1, 0 ≤ y2 ≤ 0.2, 0 < z2 ≤ 0.2, x2 + y2 + z2 = 1 and 0 ≤ b2 ≤ 0.1;
M² is one or more elements selected from B, Ba, Ca, Ce, Co, Cr, Cu, Fe, Mg, Mn, Mo, Nb, Si, Sr, Ti, V, W, and Zr; and
X is one or more elements selected from F, P, and S.

According to an embodiment, while increasing the energy density of the rechargeable lithium battery, it is possible to improve safety at room temperature and/or high temperature without deterioration in performance.

### BRIEF DESCRIPTION OF THE DRAWINGS

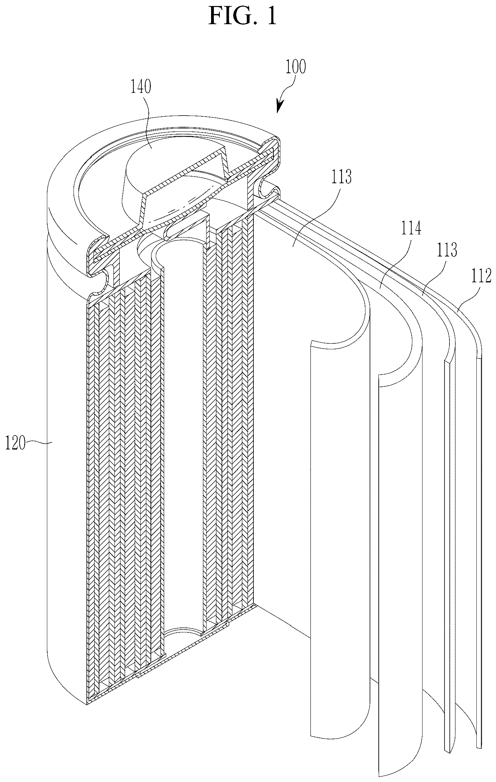

FIG. 1 is a schematic view showing a rechargeable lithium battery according to an embodiment of the present invention.

### DETAILED DESCRIPTION OF THE EMBODIMENTS

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

As used herein, when a definition is not otherwise provided, "substituted" refers to a replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 alkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 alkyl group, or a cyano group. In addition, in specific examples of the present invention, "substituted" refers to replacement of at least one hydrogen of a substituent or a compound by deuterium, a halogen, a C1 to C20 alkyl group, a C6 to C30 aryl group, a C1 to C10 alkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 alkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A lithium rechargeable battery may be classified into a lithium ion battery, a lithium ion polymer battery, and a lithium polymer battery depending on kinds of a separator and an electrolyte solution. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of the rechargeable lithium battery, a cylindrical rechargeable lithium battery will be exemplarily described. FIG. 1 schematically illustrates the structure of a rechargeable lithium battery according to an embodiment. Referring to FIG. 1, a rechargeable lithium battery 100 according to an embodiment comprises a battery cell comprising a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention comprises a positive electrode comprising a positive electrode active material; a negative electrode comprising a negative electrode active material; and an electrolyte solution comprising a non-aqueous organic solvent, a lithium salt, and an additive.
(1) The positive electrode active material is a high-nickel-based positive electrode active material, and comprises a composite oxide in which a content of nickel is greater than about 80 mol%, specifically greater than or equal to about 85 mol%, and more specifically greater than or equal to about 88 mol% of composite oxides. based on a total amount of metals (e.g., transition metals) except lithium. The upper limit of the nickel content is not particularly limited, but may be less than or equal to about 99 mol%, specifically less than or equal to about 95 mol%, and more specifically less than or equal to about 94 mol%.
   When a high-nickel-based positive electrode active material having the same nickel content is applied, by using an electrolyte solution in which a lithium salt comprising about 10 to about 50 wt% of a compound represented by Chemical Formula 1 (hereinafter referred to as "first lithium salt" in some cases) and a compound represented by Chemical Formula 2 (hereinafter referred to as "additive" in some cases) are combined, safety of the rechargeable lithium battery may be improved by using an electrolyte solution in which an additive).
(2) The lithium salt comprises a compound represented by Chemical Formula 1, wherein the compound represented by Chemical Formula 1 is comprised in an amount of about 10 to about 50 wt% based on a total amount of the lithium salt: 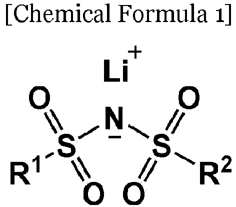 wherein, in Chemical Formula 1,
   R¹ and R² are each independently a fluoro group or a C1 to C4 alkyl group substituted with at least one fluoro group.

The first lithium salt is a compound comprising a lithium sulfonylimide salt. In the electrolyte solution, when the first lithium salt decomposes, a film is formed on the surface of the positive and negative electrodes. By effectively controlling the elution of lithium ions generated from the positive electrode, a phenomenon of positive electrode decomposition may be suppressed.

Specifically, the first lithium salt is reduced and decomposed before a carbonate-based solvent comprised in the non-aqueous organic solvent and forms a SEI (solid electrolyte interface) film on the negative electrode. Accordingly, the decomposition of the electrolyte solution and the resulting decomposition reaction of the electrode may be prevented, resulting in suppressing an increase in internal resistance due to gas generation.

The SEI film formed on the negative electrode may be partially decomposed through the reduction reaction during the charging and discharging. Components of the SEI films decomposed on the negative electrode may move onto the positive electrode surface.

The SEI film components moved onto the positive electrode surface also may form a film on the positive electrode surface through an oxidation reaction to prevent decomposition of the positive electrode surface and the oxidation reaction of the electrolyte solution. Resultantly, the negative electrode SEI film and the positive electrode SEI film may contribute to improving high-temperature and lowtemperature cycle-life characteristics of the rechargeable lithium battery.
(3) The additive comprises a compound represented by Chemical Formula 2: 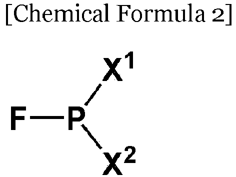 wherein, in Chemical Formula 2,
X¹ and X² are each a halogen, or -O-L¹-R³, provided that at least one of X¹ and X² is -O-L¹-R³;
L¹ is a single bond or a substituted or unsubstituted C1 to C10 alkylene group;
R³ is each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group; and
when X¹ and X² are simultaneously -O-L¹-R³, R³ is each independently present or two R³s are linked to form a substituted or unsubstituted monocyclic or polycyclic aliphatic heterocycle, or a substituted or unsubstituted monocyclic or Forms polycyclic aromatic heterocycle.

A fluorophosphite-based compound such as the additive may stabilize the lithium salt comprising the first lithium salt in the electrolyte solution. Through this, it is possible to suppress decomposition of the electrolyte solution at high temperature, suppress generation of gas inside the battery, and simultaneously improve safety and cycle-life characteristics of the rechargeable lithium battery.

However, when an electrolyte solution in which a lithium salt comprising about 10 to about 50 wt% of the first lithium salt and the additive are combined is used, and the high-nickel-based positive electrode active material is applied, safety of the rechargeable lithium battery at room temperature and/or high temperature may be below a target level.

On the other hand, in an embodiment, when an electrolyte solution in which a lithium salt comprising about 10 to about 50 wt% of the first lithium salt and the additive are combined is used, even if the high-nickel-based positive electrode active material is applied, safety of the rechargeable lithium battery may be improved without deterioration in performance under any condition of room temperature and/or high temperature.

Overall, in an embodiment, when the electrolyte solution in which lithium salt comprising about 10 to about 50 wt% of the first lithium salt and the additive are combined, even if the high-nickel-based positive electrode active material is applied, safety of the rechargeable lithium battery may be improved without deterioration in performance under any condition of room temperature and/or high temperature.

Hereinafter, a rechargeable lithium battery of an embodiment will be described in more detail.

### Lithium Salt

R¹ and R² in Chemical Formula 1 may each independently be a fluoro group or a C1 to C4 alkyl group substituted with at least two fluoro groups.

R¹ and R² in Chemical Formula 1 may each independently be a fluoro group or a C1 to C4 alkyl group substituted with at least three fluoro groups.

Specifically, R¹ and R² in Chemical Formula 1 may each independently be a fluoro group or a C1 to C3 alkyl group substituted with at least three fluoro groups.

More specifically, R¹ and R² in Chemical Formula 1 may each independently be a fluoro group or a C1 to C2 alkyl group substituted with at least three fluoro groups.

More specifically, R¹ and R² in Chemical Formula 1 may be the same.

Representative examples of the compound (first lithium salt) represented by Chemical Formula 1 are as follows:

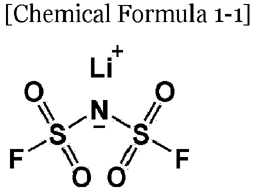

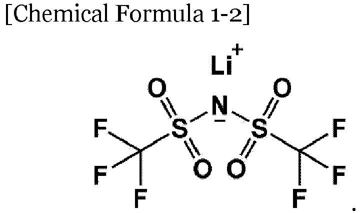

In addition to the compound represented by Chemical Formula 1 (first lithium salt), the lithium salt may further comprise one or two or more lithium salts selected from LiPF₆, LiBF₄, lithium difluoro(oxalate)borate (LiDFOB), LiPO₂F₂, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₚF₂ₚ₊₁SO₂)(C_{q}F_{2q+1}SO₂) wherein p and q are integers from 1 to 20, LiCl, LiI and LiB(C₂O₄)₂ (lithium bis(oxalato) borate: LiBOB) (hereinafter referred to as 'second lithium salt' in some cases). The second lithium salt is dissolved in a non-aqueous organic solvent and serves as a source of lithium ions in the battery to enable basic operation of the rechargeable lithium battery and promotes movement of lithium ions between the positive electrode and the negative electrode.

Specifically, the lithium salt may comprise the compound represented by Chemical Formula 1 and LiPF₆. The compound represented by Chemical Formula 1 (first lithium salt) may be comprised in an amount of greater than or equal to about to wt%, greater than or equal to about 20 wt%, or greater than or equal to about 30 wt% and less than or equal to about 50 wt%, or less than or equal to about 40 wt% based on a total amount of the lithium salt, and the LiPF₆ (second lithium salt) may be comprised in a balance amount. Herein, the total amount of the lithium salt may correspond to a molar concentration of about 0.1 M to about 2.0 M in the electrolyte solution.

### Additive

One of X¹ and X² in Chemical Formula 2 is a fluoro group, and the other is - O-L²-R⁴; L² is a single bond or a substituted or unsubstituted C1 to C10 alkylene group; and R4 may be a cyano group (-CN) or a difluorophosphite group (-OPF₂).

Specifically, Chemical Formula 2 may be Chemical Formula 2-1.

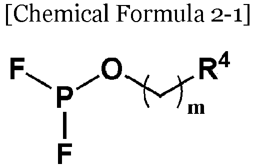

In Chemical Formula 2-1, m is an integer of 1 to 5; R⁴ is a cyano group (-CN) or a difluorophosphite group (-OPF₂).

Independently of the above, in Chemical Formula 2, X¹ may be -O-L³-R⁵ and X² may be -O-L⁴-R⁶; wherein L³ and L⁴ may each independently be a single bond or a substituted or unsubstituted C1 to C10 alkylene group; R⁵ and R⁶ may each independently be a substituted or unsubstituted C1 to C10 alkyl group, and R⁵ and R⁶ may be linked to each other to form a substituted or unsubstituted monocyclic or polycyclic aliphatic heterocycle.

Specifically, Chemical Formula 2 may be Chemical Formula 2-2.

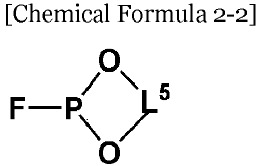

In Chemical Formula 2-2, L⁵ is a substituted or unsubstituted C2 to C5 alkylene group.

More specifically, Chemical Formula 2-2 may be Chemical Formula 2-2a or Formula 2-2b.

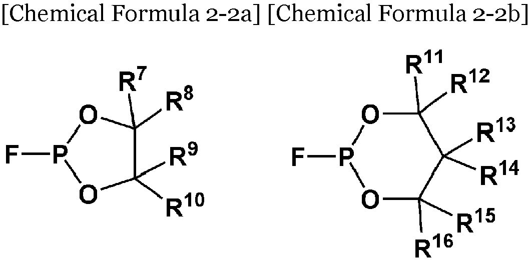

In Chemical Formulas 2-2a and 2-2b, R⁷ to R¹⁶ are each independently hydrogen, a halogen, or a substituted or unsubstituted C1 to C5 alkyl group.

Representative examples of the compound (additive) represented by Chemical Formula 2 are as follows:

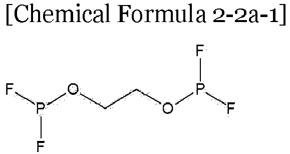

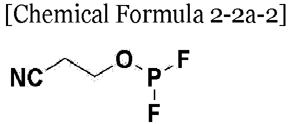

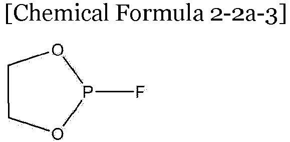

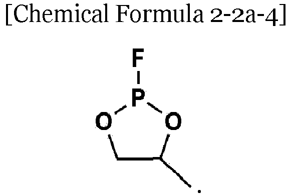

The additive may be comprised in an amount of greater than or equal to about 0.05 wt%, greater than or equal to about 0.1 wt%, greater than or equal to about 0.2 wt%, greater than or equal to about 0.3 wt%, greater than or equal to about 0.4 wt%, or greater than or equal to about 0.05 wt%; and 5.0 wt%, less than or equal to about 4.0 wt%, less than or equal to about 3.0 wt%, less than or equal to about 2.0 wt%, or less than or equal to about 1.0 wt% based on a total weight of the electrolyte solution.

For example, the rechargeable lithium battery of an embodiment comprises an electrolyte solution comprising a non-aqueous organic solvent; a lithium salt comprising lithium bis(fluorosulfonyl)imide or cesium bis(trifluoromethanesulfonyl)imide (first lithium salt) and LiPF₆ (second lithium salt) in a balance amount; and at least one (additive) of the compounds listed above. The concentration or content of each compound in the electrolyte solution is as described above.

When the content of the composition and the content of each component in the composition are within the above ranges, even if the energy density of the rechargeable lithium battery is increased, safety may be improved without deterioration in performance at room temperature and/or high temperature.

### Non-aqueous Organic Solvent

The non-aqueous organic solvent serves as a medium for transmitting ions taking part in the electrochemical reaction of a battery.

The non-aqueous organic solvent may comprise a carbonate-based, ester-based, ether-based, ketone-based, alcohol-based, or aprotic solvent.

The carbonate-based solvent may comprise dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may comprise methyl acetate, ethyl acetate, n-propyl acetate, t-butyl acetate, methylpropionate, ethylpropionate, propylpropionate, decanolide, mevalonolactone, caprolactone, and the like. The ether-based solvent may comprise dibutyl ether, tetraglyme, diglyme, dimethoxyethane, 2-methyltetrahydrofuran, tetrahydrofuran, and the like. The ketone-based solvent may comprise cyclohexanone and the like. The alcohol-based solvent may comprise ethyl alcohol, isopropyl alcohol, and the like, and examples of the aprotic solvent comprise nitriles such as R¹⁵-CN (wherein R¹⁵ is a C2 to C20 linear, branched, or cyclic hydrocarbon group, a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, their mixing ratio may be controlled in accordance with a desirable battery performance.

The carbonate-based solvent is prepared by mixing a cyclic carbonate and a linear carbonate. The cyclic carbonate and chain carbonate are mixed together in a volume ratio of about 1:9 to about 9:1. When the mixture is used as an electrolyte solution, it may have enhanced performance.

In particular, in an embodiment of the present invention, the non-aqueous organic solvent may comprise the cyclic carbonate and the chain carbonate in a volume ratio of about 2:8 to about 5:5. As a specific example, the cyclic carbonate and the chain carbonate may be comprised in a volume ratio of about 2:8 to about 4:6.

As a more specific example, the cyclic carbonate and the chain carbonate may be comprised in a volume ratio of about 2:8 to about 3:7.

The non-aqueous organic solvent may further comprise an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be an aromatic hydrocarbon-based compound represented by Chemical Formula 4.

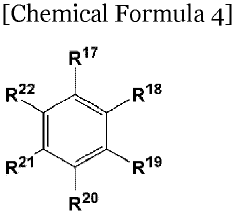

In Chemical Formula 4, R17 to R22 are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

### Positive Electrode Active Material and Positive Electrode Comprising the Same

The positive electrode comprises a positive electrode current collector and a positive electrode active material layer on the positive electrode current collector, and the positive electrode active material layer comprises a positive electrode active material.

The positive electrode active material may comprise lithiated intercalation compounds that reversibly intercalate and deintercalate lithium ions.

Specifically, at least one composite oxide of lithium and a metal of cobalt, manganese, nickel, or a combination thereof may be used.

The composite oxide having a coating layer on the surface thereof may be used, or a mixture of the composite oxide and the composite oxide having a coating layer may be used. The coating layer may comprise a coating element compound of an oxide or hydroxide of a coating element, oxyhydroxide of a coating element, oxycarbonate of a coating element, or hydroxycarbonate of a coating element. The compound for the coating layer may be either amorphous or crystalline. The coating element comprised in the coating layer may be Mg, Al, Co, K, Na, Ca, Si, Ti, V, Sn, Ge, Ga, B, As, Zr, or a mixture thereof. The coating process may comprise any conventional processes as long as it does not cause any side effects on the properties of the positive electrode active material (e.g., spray coating, dipping), which is well known to persons having ordinary skill in this art, and thus a detailed description thereof is omitted.

The positive electrode active material may be, for example, at least one of lithium composite oxides represented by Chemical Formula 3:

[Chemical Formula 3] LiₐNiₓM¹_{y}M²_{z}O_{2-b}X_{b}

wherein, in Chemical Formula 3,
0.9 ≤ a < 1.2, 0.8 < x ≤ 1, 0 ≤ y ≤ 0.2, 0 < z ≤ 0.2, x + y + z = 1 and 0 ≤ b ≤ 0.1;
M¹ and M² are each independently one or more elements selected from Mn, Al, B, Ba, Ca, Ce, Co, Cr, Cu, Fe, Mg, Mn, Mo, Nb, Si, Sr, Ti, V, W, and Zr; and
X is one or more elements selected from F, P, and S.

In an embodiment, the positive electrode active material may comprise a composite oxide represented by Chemical Formula 3-1, a composite oxide represented by Chemical Formula 3-2, or a combination thereof:

[Chemical Formula 3-1] Liₐ₁Niₓ₁Mn_{y1}M²_{z1}O_{2-b1}X_{b1}

[Chemical Formula 3-2] Liₐ₂Niₓ₂Al_{y2}M²_{z2}O_{2-b2}X_{b2}

wherein, in Chemical Formulas 3-1 and 3-2,
0.9 ≤ a1 < 1.2, 0.8 < x1 ≤ 1, 0 ≤ y1 ≤ 0.2, 0 < z1 ≤ 0.2, x1 + y1 + z1 = 1 and 0 ≤ b1 ≤ 0.1;
0.9 ≤ a2 < 1.2, 0.8 < x2 ≤ 1, 0 ≤ y2 ≤ 0.2, 0 < z2 ≤ 0.2, x2 + y2 + z2 = 1 and 0 ≤ b2 ≤ 0.1;
M² is one or more elements selected from B, Ba, Ca, Ce, Co, Cr, Cu, Fe, Mg, Mn, Mo, Nb, Si, Sr, Ti, V, W, and Zr; and
X is one or more elements selected from F, P, and S.

A content of the positive electrode active material may be about 90 wt% to about 98 wt% based on a total weight of the positive electrode active material layer.

In an embodiment of the present invention, the positive electrode active material layer may optionally comprise a conductive material and a binder. Herein, a content of the binder may be about 1 wt% to about 5 wt% based on a total weight of the positive electrode active material layer.

Each content of the conductive material and the binder may be about 1 wt% to about 5 wt%, respectively, based on a total weight of the positive electrode active material layer.

The conductive material is used to impart conductivity to the negative electrode, and any electrically conductive material may be used as a conductive material unless it causes a chemical change in a battery. Examples of the conductive material may comprise a carbon-based material such as natural graphite, artificial graphite, carbon black, acetylene black, ketjen black, carbon fiber, and the like; a metal-based material of a metal powder or a metal fiber comprising copper, nickel, aluminum, silver, and the like; a conductive polymer such as a polyphenylene derivative; or a mixture thereof.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Al may be used as the positive electrode current collector, but is not limited thereto.

### Negative Electrode

The negative electrode comprises a negative electrode current collector and a negative electrode active material layer comprising the negative electrode active material on the negative electrode current collector.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions comprises carbon materials. The carbon material may be any generally-used carbon-based negative electrode active material in a rechargeable lithium battery. Examples of the carbon material comprise crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and the like.

The lithium metal alloy may comprise lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may comprise Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and the like. At least one of them may be mixed with SiO₂.

The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be a vanadium oxide, a lithium vanadium oxide, and the like.

In an embodiment, the negative electrode active material may comprise at least one of graphite and a Si composite.

The Si composite may comprise a core comprising Si particles and amorphous carbon, for example, the Si particles may comprise at least one of Si composite, SiOₓ (0 < x ≤ 2), and an Si alloy.

For example, the Si-C composite may comprise a core comprising Si particles and amorphous carbon.

The central portion of the core may comprise pores, and the radius of the central portion may correspond to about 30% to about 50% of the radius of the Si-C composite.

The Si particles may have an average particle diameter of about 10 nm to about 200 nm.

As used herein, the average particle diameter may be a particle size (D50) at a volume ratio of 50% in a cumulative size-distribution curve.

When the average particle diameter of the Si particle is within the above range, volume expansion occurring during charging and discharging maybe suppressed, and a disconnection of a conductive path due to particle crushing during charging and discharging may be prevented.

The Si particle may be comprised in an amount of about 1 wt% to about 60 wt%, for example, about 3 wt% to about 60 wt%, based on a total weight of the Si-C composite.

The central portion may not comprise amorphous carbon, but the amorphous carbon may be present only on the surface portion of the negative electrode active material.

Herein, the surface portion indicates a region from the central portion of the negative electrode active material to the outermost surface of the negative electrode active material.

In addition, the Si particles are substantially uniformly comprised over the negative electrode active material, that is, present at a substantially uniform concentration in the central portion and the surface portion thereof.

The amorphous carbon may be soft carbon, hard carbon, mesophase pitch carbonized product, calcined coke, or a combination thereof.

The negative electrode active material may further comprise crystalline carbon.

When the negative electrode active material comprises a Si-C composite and crystalline carbon together, the Si-C composite and crystalline carbon may be comprised in the form of a mixture, and in this case, the Si-C composite and crystalline carbon may be comprised in a weight ratio of about 1:99 to about 50:50. More specifically, the Si-C composite and crystalline carbon may be comprised in a weight ratio of 3 : 97 to 20 : 80 or 5 : 95 to 20 : 80.

The crystalline carbon may be for example graphite, and more specifically natural graphite, artificial graphite, or a mixture thereof.

The crystalline carbon may have an average particle diameter of about 5 µm to about 30 µm.

The amorphous carbon precursor may comprise a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be comprised in an amount of about 95 wt% to about 99 wt% based on a total weight of the negative electrode active material layer.

In an embodiment, the negative electrode active material layer may comprise a binder, and optionally a conductive material. In the negative electrode active material layer, the amount of the binder may be about 1 wt% to about 5 wt% based on a total weight of the negative electrode active material layer. When it further comprises the conductive material, it may comprise about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrine, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and a combination thereof.

When the water-soluble binder is used as the negative electrode binder, a cellulose-based compound may be further used to provide viscosity as a thickener. The cellulose-based compound comprises one or more of carboxylmethyl cellulose, hydroxypropylmethyl cellulose, methyl cellulose, or alkali metal salts thereof. The alkali metal may be Na, K, or Li. Such a thickener may be comprised in an amount of about 0.1 to about 3 parts by weight based on 100 parts by weight of the negative electrode active material.

The conductive material is comprised to provide electrode conductivity and any electrically conductive material may be used as a conductive material unless it causes a chemical change. Examples thereof may be a carbon-based material such as natural graphite, artificial graphite, carbon black, acetylene black, ketjen black, carbon fiber and the like; a metal-based material such as a metal powder or a metal fiber and the like of copper, nickel, aluminum, silver, and the like; a conductive polymer such as a polyphenylene derivative and the like, or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Separator

The rechargeable lithium battery may further comprise a separator between the negative electrode and the positive electrode, depending on a type of the rechargeable lithium battery. These separators are porous substrates; or it may be a composite porous substrate.

The porous substrate may be a substrate comprising pores, and lithium ions may move through the pores. The porous substrate may be for example may comprise polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form comprising a porous substrate and a functional layer on the porous substrate. The functional layer may be, for example, at least one of a heat-resistant layer and an adhesive layer from the viewpoint of enabling additional function. For example, the heat-resistant layer may comprise a heat-resistant resin and optionally a filler.

In addition, the adhesive layer may comprise an adhesive resin and optionally a filler.

The filler may be an organic filler or an inorganic filler.

Hereinafter, examples of the present invention and comparative examples are described. These examples, however, are not in any sense to be interpreted as limiting the scope of the invention.

### Manufacture of Rechargeable Lithium Battery Cell

### Example 1-1

LiNi_{0.88}Co_{0.105}Al_{0.015}O₂ as a positive electrode active material, polyvinylidene fluoride as a binder, and ketjen black as a conductive material were mixed respectively in a weight ratio of 97:2:1, and then, dispersed in N-methyl pyrrolidone to prepare positive electrode active material slurry.

The positive electrode active material slurry was coated on a 14 µm-thick Al foil, dried at 110 °C, and pressed to manufacture a positive electrode.

A mixture of artificial graphite and Si-C composite in a weight ratio of 93:7 was prepared as a negative electrode active material, and the negative electrode active material, a styrene-butadiene rubber as a binder, and carboxylmethyl cellulose as a thickener in a weight ratio of 97:1:2 were dispersed in distilled water to prepare negative electrode active material slurry.

The Si-C composite comprised a core comprising artificial graphite and silicon particles and coal pitch coated on the surface of the core.

The negative electrode active material slurry was coated on a 10 µm-thick Cu foil, dried at 100 °C, and pressed to manufacture a negative electrode.

The manufactured positive and negative electrodes and a polyethylene separator having a thickness of 25 µm were assembled to manufacture an electrode assembly, and the electrolyte solution was injected to prepare a rechargeable lithium battery cell.

A composition of the electrolyte solution is as follows.

### (Composition of Electrolyte Solution)

### (1) Non-aqueous organic solvent

A mixture in which ethylene carbonate, ethylmethyl carbonate, and dimethyl carbonate are mixed in a volume ratio of ethylene carbonate: ethylmethyl carbonate: dimethyl carbonate (EC: EMC: DMC) = 20:10:70

### (2) Lithium salt

A mixture in which 10 wt% of a first lithium salt (LiFSI, Chemical Formula 1-1) and 90 wt% of a second lithium salt (LiPF₆) are mixed and a total amount of lithium salts (first lithium salt and second lithium salt) in the electrolyte solution corresponds to 1.5 M

### (3) Additive

An additive (Chemical Formula 2-2a-4) comprised in 1 wt% based on a total weight of the electrolyte solution (first lithium salt+ second lithium salt+ non-aqueous organic solvent + additive)

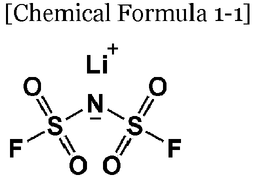

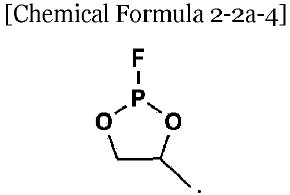

### Example 1-2

A rechargeable lithium battery cell was manufactured in the same manner as in Example 1-1 except that a mixture of 35 wt% of the first lithium salt (LiFSI, Chemical Formula 1-1) and 65 wt% of the second lithium salt (LiPF₆) was used as the lithium salts.

### Example 1-3

A rechargeable lithium battery cell was manufactured in the same manner as in Example 1-1 except that a mixture of 50 wt% of the first lithium salt (LiFSI, Chemical Formula 1-1) and 50 wt% of the second lithium salt (LiPF₆) was used as the lithium salts.

### Comparative Example 1-1

A rechargeable lithium battery cell was manufactured in the same manner as in Example 1-1 except that the first lithium salt (LiFSI, Chemical Formula 1-1) was not used, but the second lithium salt (LiPF₆) alone was used as the lithium salts.

### Comparative Example 1-2

A rechargeable lithium battery cell was manufactured in the same manner as in Example 1-1 except that a mixture of 80 wt% of the first lithium salt (LiFSI, Chemical Formula 1-1) and 20 wt% of the second lithium salt (LiPF₆) was used as the lithium salts.

### Examples 2-1 to 2-3

Each rechargeable lithium battery cell was manufactured in the same manner as in

Examples 1-1 to 1-3 except that LiNi_{0.91}Co_{0.075}Al_{0.015}O₂ was used as the positive electrode active material.

### Comparative Examples 2-1 and 2-2

Each rechargeable lithium battery cell was manufactured in the same manner as in Comparative Example 1-1 and 1-2 except that LiNi_{0.91}Co_{0.075}Al_{0.015}O₂ was used as the positive electrode active material.

### Examples 3-1 to 3-3

Each rechargeable lithium battery cell was manufactured in the same manner as in Examples 1-1 to 1-3 except that LiNi_{0.94}Co_{0.045}Al_{0.015}O₂ was used as the positive electrode active material.

### Comparative Examples 3-1 and 3-2

Each rechargeable lithium battery cell was manufactured in the same manner as in Comparative Examples 1-1 and 1-2, respectively except that LiNi_{0.94}Co_{0.045}Al_{0.015}O₂ was used as the positive electrode active material.

### Comparative Examples 4-1 to 4-3

Each rechargeable lithium battery cell was manufactured in the same manner as in Examples 1-1 to 1-3, respectively except that LiNi_{0.80}Co_{0.185}Al_{0.015}O₂ was used as the positive electrode active material.

### Comparative Examples 5-1 to 5-3

Each rechargeable lithium battery cell was manufactured in the same manner as in Examples 1-1 to 1-3, respectively except that LiNi_{0.60}Co_{0.2}Mn_{0.2}O₂ was used as the positive electrode active material.

### Comparative Examples 6-1 to 6-3

Each rechargeable lithium battery cell was manufactured in the same manner as in Examples 1-1 to 1-3, respectively except that LiNi_{0.50}Co_{0.2}Mn_{0.3}O₂ was used as the positive electrode active material.

### Comparative Examples 7-1 to 7-3

Each rechargeable lithium battery cell was manufactured in the same manner as in Examples 1-1 to 1-3, respectively except that LiNi_{0.30}Co_{0.35}Mn_{0.35}O₂ was used as the positive electrode active material.

The main components of rechargeable lithium battery cells according to the examples and the comparative examples were shown in Tables 1 and 2.

**(Table 1)**

| | Positive electrode active material | Electrolyte solution | |
|---|---|---|---|
| | Nickel content [mol%] in the total amount of transition metal | First lithium salt: Second lithium salt (weight ratio) | Content of additive in electrolyte solution [wt%] |
| Comp. Ex. 1-1 | 88 | Second lithium salt alone was used | 1.0 |
| Ex. 1-1 | 88 | 10:90 | 1.0 |
| Ex. 1-2 | 88 | 35:65 | 1.0 |
| Ex. 1-3 | 88 | 50:50 | 1.0 |
| Comp. Ex. 1-2 | 88 | 80:20 | 1.0 |
| Comp. Ex. 2-1 | 91 | Second lithium salt alone was used | 1.0 |
| Ex. 2-1 | 91 | 10:90 | 1.0 |
| Ex. 2-2 | 91 | 35:65 | 1.0 |
| Ex. 2-3 | 91 | 50:50 | 1.0 |
| Comp. Ex. 2-2 | 91 | 80:20 | 1.0 |
| Comp. Ex. 3-1 | 94 | Second lithium salt alone was used | 1.0 |
| Ex. 3-1 | 94 | 10:90 | 1.0 |
| Ex. 3-2 | 94 | 35:65 | 1.0 |
| Ex. 3-3 | 94 | 50:50 | 1.0 |
| Comp. Ex. 3-2 | 94 | 80:20 | 1.0 |

**(Table 2)**

| | Positive electrode active material | Electrolyte solution | |
|---|---|---|---|
| | Nickel content [mol%] in the total amount of transition metal | First lithium salt: Second lithium salt (weight ratio) | Content of additive in electrolyte solution [wt%] |
| Comp. Ex. 4-1 | 80 | 10:90 | 1.0 |
| Comp. Ex. 4-2 | 80 | 35:65 | 1.0 |
| Comp. Ex. 4-3 | 80 | 50:50 | 1.0 |
| Comp. Ex. 5-1 | 60 | 10:90 | 1.0 |
| Comp. Ex. 5-2 | 60 | 35:65 | 1.0 |
| Comp. Ex. 5-3 | 60 | 50:50 | 1.0 |
| Comp. Ex. 6-1 | 50 | 10:90 | 1.0 |
| Comp. Ex. 6-2 | 50 | 35:65 | 1.0 |
| Comp. Ex. 6-3 | 50 | 50:50 | 1.0 |
| Comp. Ex. 7-1 | 30 | 10:90 | 1.0 |
| Comp. Ex. 7-2 | 30 | 35:65 | 1.0 |
| Comp. Ex. 7-3 | 30 | 50:50 | 1.0 |

Herein, in the positive electrode active material compositions of Tables 1 and 2, a unit of "mol%" of the nickel content was based on 100 mol% of a total amount of metals excluding lithium in each positive electrode active material.

In addition, the electrolyte solution compositions of Tables 1 and 2, the weight ratio of the first lithium salt : the second lithium salt was a ratio of contents (parts by weight) of each lithium salt.

In addition, in the electrolyte solution compositions of Tables 1 and 2, a unit "wt%" of the additive content was based on 100 wt% of a total content of each electrolyte solution (lithium salt+non-aqueous organic solvent+additive).

### Evaluation 1: Evaluation of Initial Resistance Characteristics

The rechargeable lithium battery cells according to the examples and the comparative examples were charged at 4 A and 4.2 V, cut off at 100 mA, and paused for 30 minutes at room temperature (25 °C). Subsequently, the cells were discharged at 10 A for 10 seconds, at 1 A for 10 seconds, and at 10 A for 4 seconds, respectively and then, measured with respect to a current and a voltage at 18 seconds and 23 seconds, respectively to calculate initial resistance (a resistance difference at 18 seconds and 23 seconds) according to ΔR=ΔV/ΔI, and the results are shown in Table 3.

### Evaluation 2: Evaluation of High-temperature Characteristics

High-temperature characteristics of the cells are evaluated under the following conditions, and the results are shown in Tables 3 and 4.
(1) High-temperature leaving characteristics: The rechargeable lithium battery cells of the examples and the comparative examples were allowed to stand in a 60 °C chamber for 30 days to measure direct current internal resistance (DC-IR).
(2) Storage characteristics at a high temperature: The rechargeable lithium battery cells of the examples and the comparative examples were allowed to stand at 60 °C for 30 days and then, measured with respect to direct current internal resistance (DC-IR).
(3) High-temperature cycle-life characteristics: The rechargeable lithium battery cells of the examples and the comparative examples were charged to 4.2 V under a condition of 1.0 C constant current/constant voltage, cut off at 0.33 C, and discharged to 3.0 V under a constant current condition of 1.0 C' at 45 °C, which was regarded as one charge and discharge cycle, and this charge and discharge cycle was 200 times repeated to measure a percentage (%) ratio of discharge capacity after the high-temperature cycles to discharge capacity before the high-temperature cycles.

**(Table 3)**

| | Evaluation results of rechargeable lithium battery cells | | | |
|---|---|---|---|---|
| | Initial | High temperature | | |
| | Initial DCIR | DCIR (mohm) after being left at a high temperature | DCIR increase rate during high-temperature storage (%, 60 °C for 30 days) | DCIR increase rate after high temperature cycle-life (%, 45 °C, 200 cycles) |
| Comp. Ex. 1-1 | 30.8 | 33.1 | 7.50% | 80% |
| Ex. 1-1 | 30.6 | 32.5 | 6.20% | 78% |
| Ex. 1-2 | 30 | 31.6 | 5.30% | 76% |
| Ex. 1-3 | 29.5 | 30.8 | 4.40% | 71% |
| Comp. Ex. 1-2 | 31 | 32.9 | 6.10% | 73% |
| Comp. Ex. 2-1 | 30.3 | 32.1 | 5.90% | 70% |
| Ex. 2-1 | 29.8 | 30.8 | 3.40% | 68% |
| Ex. 2-2 | 29.5 | 30.1 | 2.00% | 60% |
| Ex. 2-3 | 29 | 29.5 | 1.70% | 58% |
| Comp. Ex. 2-2 | 29.6 | 30.3 | 2.40% | 62% |
| Comp. Ex. 3-1 | 29.2 | 31.6 | 8.20% | 73% |
| Ex. 3-1 | 28.9 | 30.9 | 6.90% | 67% |
| Ex. 3-2 | 28.7 | 30.4 | 5.90% | 66% |
| Ex. 3-3 | 28.1 | 29.5 | 5.00% | 64% |
| Comp. Ex. 3-2 | 28.5 | 30.7 | 7.70% | 70% |

**(Table 4)**

| | Evaluation results of rechargeable lithium battery cells | | | |
|---|---|---|---|---|
| | Initial | High temperature | | |
| | Initial DCIR | DCIR (mohm) after being left at a high temperature | DCIR increase rate during high-temperature storage (%, 60 °C for 30 days) | DCIR increase rate after high temperature cycle-life (%, 45 °C 200 cycles) |
| Comp. Ex. 4-1 | 35.5 | 40.4 | 13.8% | 83% |
| Comp. Ex. 4-2 | 35.4 | 40.5 | 14.4% | 84% |
| Comp. Ex. 4-3 | 36.2 | 43.6 | 20.4% | 87% |
| Comp. Ex. 5-1 | 40.9 | 45.9 | 12.20% | 86% |
| Comp. Ex. 5-2 | 39.7 | 44.9 | 13.10% | 88% |
| Comp. Ex. 5-3 | 40.2 | 53.3 | 32.60% | 92% |
| Comp. Ex. 6-1 | 45.3 | 52.3 | 15.50% | 89% |
| Comp. Ex. 6-2 | 44.9 | 59.6 | 32.70% | 95% |
| Comp. Ex. 6-3 | 51.5 | 63.3 | 22.90% | 92% |
| Comp. Ex. 7-1 | 53.2 | 60.2 | 13.20% | 94% |
| Comp. Ex. 7-2 | 54.2 | 65.5 | 20.80% | 96% |
| Comp. Ex. 7-3 | 56.6 | 69.9 | 23.50% | 102% |

Referring to Tables 3 and 4, when the positive electrode active materials with the same nickel content were applied, safety of the rechargeable lithium battery cells was improved by using the electrolyte solutions with combinations of the first lithium salt and the additive.

However, when electrolyte solutions comprising combinations of lithium salts comprising less than 10 wt% or greater than 50 wt% of the first lithium salt and the additive were used, and the high nickel-based positive electrode active material was applied, the safety of the rechargeable lithium battery cells may fall below the target level under room-temperature and/or high-temperature conditions.

On the contrary, when electrolyte solutions comprising combinations of lithium salt comprising less than 10 wt% to greater than 50 wt% of the first lithium salt and the additive were used, even though the high nickel-based positive electrode active material was applied, the safety of rechargeable lithium battery cells may be improved without deteriorating performance under the high-temperature condition.

For example, in Examples 1-1 to 1-3 and Comparative Examples 1-1 and 1-2 in which the positive electrode active materials with the same nickel content were applied, Examples 1-1 to 1-3 using the electrolyte solutions comprising combinations of lithium salts comprising less than 10 wt% or greater than 50 wt% of the first lithium salt and the additive, compared with Comparative Examples 1-1 and 1-2 using the electrolyte solutions comprising combinations of lithium salts comprising about 10 wt% to about 50 wt% of the first lithium salt and the additive, exhibited improved safety of the rechargeable lithium battery cells without deteriorating performance under the high temperature conditions such as high temperature cycle-life, etc. when allowed to stand at the high temperature.

On the other hand, in the comparative examples, to which a positive electrode active material with less than 80 mol% of a nickel content was applied, even though an electrolyte solution comprising combinations of lithium salts comprising the first lithium salt within the wt% range and the additive was used, the safety of rechargeable lithium battery cells fell below the target level without deteriorating performance under the high temperature conditions such as high-temperature cycle-life, etc., when allowed to stand at a high temperature.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims.

### <Description of Symbols>

100: rechargeable lithium battery
112: negative electrode
113: separator
114: positive electrode
120: battery case
140: sealing member

## Claims

1. A rechargeable lithium battery, comprising
a positive electrode comprising a positive electrode active material;
a negative electrode comprising a negative electrode active material; and
an electrolyte solution comprising a non-aqueous organic solvent, a lithium salt, and an additive,
wherein the positive electrode active material comprises a composite oxide having a nickel content of greater than about 80 mol% based on a total amount of metals except lithium,
the lithium salt comprises a compound represented by Chemical Formula 1, and the compound represented by Chemical Formula 1 is comprised in about 10 wt% to about 50 wt% based on a total amount of the lithium salt, and
the additive comprises a compound represented by Chemical Formula 2: 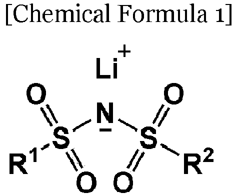 wherein, in Chemical Formula 1,
R¹ and R² are each independently a fluoro group or a C1 to C4 alkyl group substituted with at least one fluoro group; 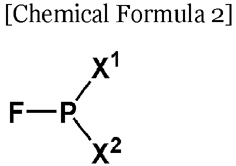 wherein, in Chemical Formula 2,
X¹ and X² are each a halogen, or -O-L¹-R³, provided that at least one of X¹ and X² is -O-L¹-R³;
L¹ is a single bond or a substituted or unsubstituted C1 to C10 alkylene group;
R³ is each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C3 to C10 cycloalkyl group, a substituted or unsubstituted C3 to C10 cycloalkenyl group, a substituted or unsubstituted C2 to C10 alkynyl group, a substituted or unsubstituted C3 to C10 cycloalkynyl group, or a substituted or unsubstituted C6 to C20 aryl group; and
when X¹ and X² are simultaneously -O-L¹-R³, R³ is each independently present or two R³s are linked to form a substituted or unsubstituted monocyclic or polycyclic aliphatic heterocycle, or a substituted or unsubstituted monocyclic or forms polycyclic aromatic heterocycle.

2. The rechargeable lithium battery of claim 1, wherein in Chemical Formula 1, R¹ and R² are each independently a fluoro group or a C1 to C4 alkyl group substituted with at least three fluoro groups.

3. The rechargeable lithium battery of claim 2, wherein in Chemical Formula 1, R¹ and R² are the same.

4. The rechargeable lithium battery of claim 3, wherein Chemical Formula 1 is Chemical Formula 1-1 or Chemical Formula 1-2:

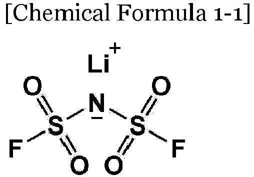

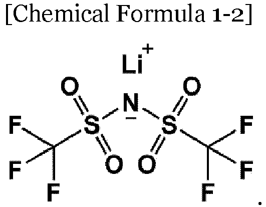

5. The rechargeable lithium battery of any one of claims 1 to 4, wherein
the lithium salt further comprises one or two or more selected from LiPF₆, LiBF₄, lithium difluoro(oxalate)borate (LiDFOB), LiPO₂F₂, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₚF₂ₚ₊₁SO₂)(C_{q}F_{2q+1}SO₂), wherein, p and q are integers from 1 to 20, LiCl, LiI, and LiB(C₂O₄)₂ (lithium bis(oxalato) borate: LiBOB).

6. The rechargeable lithium battery of claim 5, wherein the lithium salt comprises the compound represented by Chemical Formula 1 and LiPF₆.

7. The rechargeable lithium battery of claim 6, wherein based on a total amount of the lithium salt, the compound represented by Chemical Formula 1 is comprised in an amount of about 10 wt% to about 50 wt%, and LiPF₆ is comprised in a balance amount.

8. The rechargeable lithium battery of claim 7, wherein a total amount of the lithium salt corresponds to a molar concentration of about 0.1 M to about 2.0 M in the electrolyte solution.

9. The rechargeable lithium battery of any one of claims 1 to 8, wherein
in Chemical Formula 2,
one of X¹ and X² is a fluoro group and the other is -O-L²-R⁴;
L² is a single bond or a substituted or unsubstituted C1 to C10 alkylene group; and
R⁴ is a cyano group (-CN) or a difluorophosphite group (-OPF₂); OR
wherein
Chemical Formula 2 is Chemical Formula 2-1: 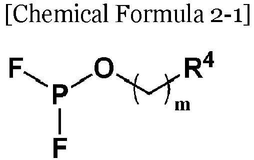 wherein, in Chemical Formula 2-1,
m is an integer from 1 to 5; and
R4 is a cyano group (-CN) or a difluorophosphite group (-OPF₂).

10. The rechargeable lithium battery of any one of claims 1 to 8, wherein
in Chemical Formula 2,
X¹ is -O-L³-R⁵ and X² is -O-L⁴-R⁶;
L³ and L⁴ are each independently a single bond or a substituted or unsubstituted C1 to C10 alkylene group;
R⁵ and R⁶ are each independently a substituted or unsubstituted C1 to C10 alkyl group, or R⁵ and R⁶ are linked to form a substituted or unsubstituted monocyclic or polycyclic aliphatic heterocycle.

11. The rechargeable lithium battery of claim 10, wherein
Chemical Formula 2 is Chemical Formula 2-2: 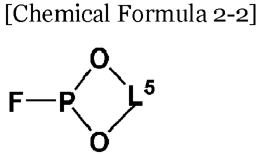 wherein, in Chemical Formula 2-2,
L⁵ is a substituted or unsubstituted C2 to C5 alkylene group;
OR
wherein
Chemical Formula 2 is Chemical Formula 2-2, and Chemical Formula 2-2 is Chemical Formula 2-2a or Chemical Formula 2-2b: 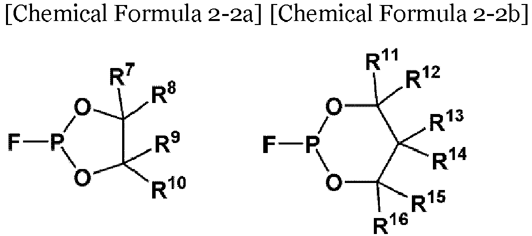 wherein, in Chemical Formulas 2-2a and 2-2b,
R⁷ to R¹⁶ are each independently hydrogen, a halogen, or a substituted or unsubstituted C1 to C5 alkyl group.

12. The rechargeable lithium battery of any one of claims 1 to 8, wherein the additive is any one selected from:

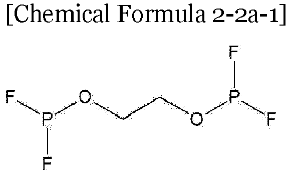

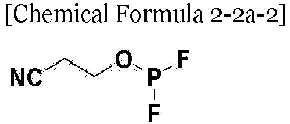

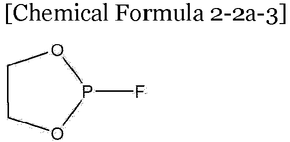

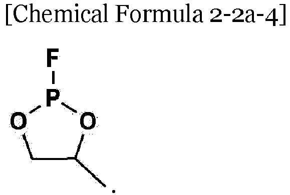

13. The rechargeable lithium battery of any one of claims 1 to 12, wherein the additive is comprised in an amount of about 0.05 wt% to about 5.0 wt% based on a total weight of the electrolyte solution.

14. The rechargeable lithium battery of any one of claims 1 to 13, wherein the positive electrode active material comprises a composite oxide represented by Chemical Formula 3:
[Chemical Formula 3] LiₐNiₓM¹_{y}M²_{z}O_{2-b}X_{b}
wherein, in Chemical Formula 3,
0.9 ≤ a < 1.2, 0.8 < x ≤ 1, 0 ≤ y ≤ 0.2, 0 < z ≤ 0.2, x + y + z = 1 and 0 ≤ b ≤ 0.1;
M¹ and M² are each independently one or more elements selected from Mn, Al, B, Ba, Ca, Ce, Co, Cr, Cu, Fe, Mg, Mn, Mo, Nb, Si, Sr, Ti, V, W, and Zr; and
X is one or more elements selected from F, P, and S.

15. The rechargeable lithium battery of claim 14, wherein
the positive electrode active material comprises a composite oxide represented by Chemical Formula 3-1, a composite oxide represented by Chemical Formula 3-2, or a combination thereof:
[Chemical Formula 3-1] Liₐ₁Niₓ₁Mn_{y1}M²_{z1}O_{2-b1}X_{b1}
[Chemical Formula 3-2] Liₐ₂Niₛ₂Al_{y2}M²_{z2}O_{2-b2}X_{b2}
wherein, in Chemical Formulas 3-1 and 3-2,
0.9 ≤ a1 < 1.2, 0.8 < x1 ≤ 1, o ≤ y1 ≤ 0.2, 0 < z1 ≤ 0.2, x1 + y1 + z1 = 1 and 0 ≤ b1 ≤ 0.1;
0.9 ≤ a2 < 1.2, 0.8 < x2 ≤ 1, 0 ≤ y2 ≤ 0.2, 0 < z2 ≤ 0.2, x2 + y2 + z2 = 1 and 0 ≤ b2 ≤ 0.1;
M² is one or more elements selected from B, Ba, Ca, Ce, Co, Cr, Cu, Fe, Mg, Mn, Mo, Nb, Si, Sr, Ti, V, W, and Zr; and
X is one or more elements selected from F, P, and S.
